# FASCICULE DE BREVET EUROPEEN

(11) **EP 2 356 028 B1**
(45) Date de publication et mention de la délivrance du brevet: **27.03.2013**
(21) Numéro de dépôt: 09796017.3
(22) Date de dépôt: 18.11.2009
(51) Int. Cl.: B64D 29/00

(54) **TRAPPE DE SURPRESSION DESTINÉE À ÊTRE MONTÉE SUR UNE PAROI D'UNE NACELLE POUR TURBORÉACTEUR**
ÜBERDRUCKKLAPPE ZUR MONTAGE AUF EINER WAND EINER TRIEBWERKSGONDEL
PRESSURE RELIEF PANEL FOR MOUNTING ON A TURBINE ENGINE NACELLE WALL

(30) Priorité: 12.12.2008 FR 0806991
(43) Date de publication de la demande: 17.08.2011
(73) Titulaire: Aircelle, 76700 Gonfreville l'Orcher (FR)
(72) Inventeur: VAUCHEL, Guy, Bernard, F-76600 Le Havre (FR)
(74) Mandataire: Gaillarde, Frédéric F. Ch.
(86) Numéro de dépôt international: PCT/FR2009/001324
(87) Numéro de publication internationale: WO 2010/066958

(56) Documents cités:
- CA-A- 459 251
- FR-A- 2 406 729
- US-A- 4 825 644
- US-A- 5 765 883

## Description

La présente invention concerne une trappe de surpression destinée à être montée sur la paroi externe d'une nacelle pour turboréacteur, ladite paroi étant en contact avec le flux d'air dévié autour de la nacelle, ainsi qu'une nacelle pour turboréacteur comportant une telle trappe.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseur de poussée.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur. La structure tubulaire est généralement terminée par une tuyère d'éjection dont la sortie est située en aval du turboréacteur.

On entend ici par le terme « aval » la direction correspondant au sens du flux d'air froid pénétrant dans le turboréacteur. Le terme « amont » désigne la direction opposée.

Les nacelles modernes sont destinées à abriter un turboréacteur double flux apte à générer par l'intermédiaire des pales de la soufflante en rotation un flux d'air chaud (également appelé « flux primaire ») issu de la chambre de combustion du turboréacteur, et un flux d'air froid («flux secondaire ») qui circule à l'extérieur du turboréacteur à travers un passage annulaire, également appelé « veine ».

Un turboréacteur comporte usuellement une partie dite « amont » comprenant les pales de la soufflante et une partie dite « aval » abritant le générateur de gaz.

Une nacelle pour un tel moteur présente généralement une structure externe, dite Outer Fixed Structure (OFS) et une structure interne concentrique, dite Inner Fixed Structure (IFS), entourant la structure du moteur proprement dite à l'aval de la soufflante. Les structures interne et externe définissent une veine destinée à canaliser le flux d'air froid qui circule à l'extérieur du moteur. Les flux primaire et secondaire sont éjectés du moteur par l'arrière de la nacelle.

Une structure de nacelle doit supporter tous les efforts qu'elle subit en vol comme au sol, notamment toute surpression survenant lors de l'éclatement de tuyauterie(s) haute pression.

Il est connu des nacelles comportant des trappes de surpression articulées permettant d'accéder à certains composants du turboréacteur. Or, pour ce faire, ladite trappe de surpression est articulée de manière à contenir son ouverture en débattement pour ne pas impacter la structure de la nacelle environnante. Elle est en outre reliée électriquement à la masse de la nacelle.

Le type de trappe connue à ce jour est métallique, lourde, onéreuse et complexe à régler pour le déclenchement de l'ouverture à la bonne valeur de surpression. Une telle trappe est décrite dans le document US 4 825 644.

Un but de la présente invention est donc de fournir une trappe de surpression pour nacelle efficace, simple à utiliser, légère et peu onéreuse.

A cet effet, selon un premier aspect, l'invention a pour objet une trappe de surpression destinée à être montée sur une paroi d'une nacelle pour turboréacteur, la trappe de surpression comportant un support destiné à être fixé sur la paroi et au moins un élément d'évacuation mobile par rapport audit support, caractérisée en ce qu'elle comprend au moins une partie présentant une résistance mécanique plus faible que le reste de la trappe de surpression de manière à évacuer l'air en surpression à l'intérieur de la nacelle lorsque la valeur de la pression interne exercée sur ladite trappe atteint sensiblement une valeur de pression seuil inférieure à la pression maximale supportée par la structure de la nacelle.

La paroi de la nacelle peut être une paroi externe, ladite paroi étant en contact avec le flux d'air dévié autour de la nacelle, ou une paroi interne, ladite paroi étant en contact avec le flux d'air pénétrant dans ladite nacelle.

La trappe de l'invention présente une ou des parties de résistance mécanique moins importante que le reste de la trappe de l'invention et de la structure de la nacelle. Ainsi, en cas d'éclatement d'un ou de plusieurs tuyaux de surpression situés à l'intérieur de la nacelle, la ou les parties absorbent les efforts exercés sur ladite trappe, notamment en se déformant ou en rompant, avant le reste de la trappe de l'invention et de la structure de la nacelle lorsque la pression interne est inférieure à la pression maximale supportée par la structure de la nacelle. L'air en surpression à l'intérieur de la nacelle est alors évacué par le ou les éléments d'évacuation de manière simple et efficace. Il n'est donc plus nécessaire de régler le déclenchement de l'ouverture de la trappe de surpression comme cela est le cas dans l'art antérieur ce qui permet de réduire le coût d'installation. Le coût de fabrication ainsi que la masse d'une telle trappe sont également réduits dans la mesure où la trappe de l'invention comporte moins de composants que les trappes de surpression traditionnelles. Il est en outre envisageable de fabriquer la trappe de l'invention dans des matériaux légers non métalliques.

On entend ici par « intérieur de la nacelle », l'espace délimité par les parois de la nacelle, cet espace ne comprenant pas la veine dans laquelle circule le flux d'air froid et qui est formée par la structure interne fixe et par la structure externe fixe.

Selon d'autres caractéristiques de l'invention, la trappe de l'invention comporte l'une ou plusieurs des caractéristiques optionnelles suivantes considérées seules ou selon toutes les combinaisons possibles :
- la ou les parties sont aptes à se déformer ou à rompre de manière à évacuer l'air en surpression à l'intérieur de la nacelle lorsque la valeur de la pression exercée sur le ou les éléments d'évacuation atteint la valeur de pression seuil ce qui permet une meilleure absorption des efforts engendrés sur la trappe de l'invention ;
- la valeur seuil est comprise entre 0,02 bar et 0,15 bar ;
- au moins un élément d'évacuation comprend un panneau présentant au moins une ligne de découpe apte à rompre lorsque la valeur de la pression exercée sur le panneau atteint la valeur de pression seuil, et une ligne de pliage autour de laquelle ledit panneau est mobile en rotation ce qui permet une conception simple des trappes de l'invention ;
- au moins un élément d'évacuation comprend un panneau comprenant une ligne de fatigue apte à rompre lorsque la valeur de la pression exercée sur le panneau atteint la valeur de pression seuil ce qui permet d'évacuer la surpression par un dispositif simple à réaliser ;
- la ligne de fatigue est composée d'une rainure dirigée de sorte à être au contact de l'air en surpression ce qui permet d'adapter la résistance mécanique en fonction de la valeur de pression seuil souhaitée ;
- un élément d'évacuation est une porte dont le système de verrouillage comporte au moins une ligne de fatigue ce qui permet d'accéder en cas d'urgence aux équipements situés à l'intérieur de la nacelle ;
- la ligne de fatigue est intégrée dans une languette apte à coulisser dans un logement correspondant fixé dans le support ce qui permet de remplacer simplement la partie de résistance mécanique moins importante ;
- le ou les éléments d'évacuation comportent au moins une porte apte à se déformer de manière élastique pour se dégager du support lorsque la valeur de la pression interne exercée sur ladite trappe atteint sensiblement la valeur de pression seuil ce qui permet de réaliser simplement et à faible le coût à la fois le ou les éléments d'évacuation et la partie de résistance mécanique moins importante ;
- la trappe de l'invention est prise en sandwich entre une plaque interne destinée à être montée vers l'intérieur de la nacelle en contact avec le flux d'air en surpression et une plaque externe destinée à être montée vers l'extérieur de la nacelle en contact avec le flux d'air externe à la nacelle, lesdites plaques interne et externe étant fixées par des moyens de fixation au travers de ladite trappe de surpression ;
- la plaque interne comporte au moins un élément de rupture apte à rompre lorsque la valeur de la pression interne exercée sur la trappe atteint sensiblement la valeur de pression seuil ce qui participe à l'évacuation de l'air sous pression ;
- l'élément de rupture est une rainure apte à rompre lorsque la valeur de la pression exercée sur le panneau interne atteint la valeur de pression seuil ;
- la trappe de l'invention comporte une partie centrale et une partie latérale, la partie latérale étant apte à se déformer de sorte permettre le soulèvement de la partie centrale à la manière d'un clapet afin d'évacuer l'air en surpression ;
- la trappe de l'invention couvre sensiblement une grille destinée à être montée à l'intérieur de la nacelle en contact avec le flux d'air en surpression, ladite grille étant configurée pour diriger une partie du flux d'air en surpression vers l'extérieur de la nacelle ce qui permet de contrôler l'orientation d'une partie du flux d'air sous pression ;
- le ou les éléments d'évacuation et/ou la ou les parties sont réalisés dans un matériau thermoplastique ce qui permet d'alléger la masse de la trappe de l'invention et de limiter les coûts de fabrication de cette dernière.

Selon un autre aspect, l'invention a pour objet une nacelle pour turboréacteur, caractérisée en ce qu'elle comporte au moins une trappe selon l'invention.

De préférence, la nacelle de l'invention comporte une pluralité de trappes de l'invention aptes à évacuer de l'air en surpression à l'intérieur de la nacelle à différentes valeurs de pression seuil.

L'invention sera davantage comprise à la lecture de la description non limitative qui va suivre, faite en référence aux figures ci-annexées.
- La figure 1 est une coupe schématique transversale d'une nacelle de l'invention entourant un turboréacteur ;
- la figure 2 est une vue schématique d'un mode de réalisation de la trappe de l'invention montée sur une paroi externe d'une nacelle de l'invention, la trappe étant en position de fermeture ;
- les figures 3 er 4 sont respectivement une vue de face et une coupe transversale d'une variante de la trappe de l'invention représentée à la figure 2 montée sur la nacelle de la figure 1 ;
- la figure 5 est une coupe transversale de la trappe de l'invention représentée aux figures 3 et 4 en position d'ouverture après explosion d'une tuyauterie sous pression ;
- la figure 6 est une vue de face d'une variante de la figure 3 ;
- les figures 7 et 8 sont respectivement une vue de face et une coupe transversale d'une variante de la trappe de l'invention représentée à la figure 2, respectivement en position de fermeture et en position d'ouverture ;
- les figures 8 et 9 sont des coupes transversales d'un autre mode de réalisation de la trappe de l'invention représentée à la figure 2 respectivement en position de fermeture et d'ouverture ;
- les figures 10 et 11 sont respectivement une vue de face et une coupe transversale d'une variante de la trappe de l'invention représentée à la figure 2 ;
- les figures 12 à 14 sont des coupes transversales d'un autre mode de réalisation de la trappe de l'invention représentée à la figure 2, respectivement en position de fermeture, en position de début d'ouverture et en position d'ouverture ;
- les figures 15 et 16 sont des des coupes transversales d'un autre mode de réalisation de la trappe de l'invention représentée à la figure 2, respectivement en position de fermeture et en position d'ouverture ;
- les figures 17 et 18 sont sont des des coupes transversales d'un autre mode de réalisation de la trappe de l'invention représentée à la figure 2, respectivement en position de fermeture et en position d'ouverture ;
- les figures 19 à 21 sont des des coupes transversales d'un autre mode de réalisation de la trappe de l'invention représentée à la figure 2, respectivement en position de fermeture, en position de début d'ouverture et en position d'ouverture.

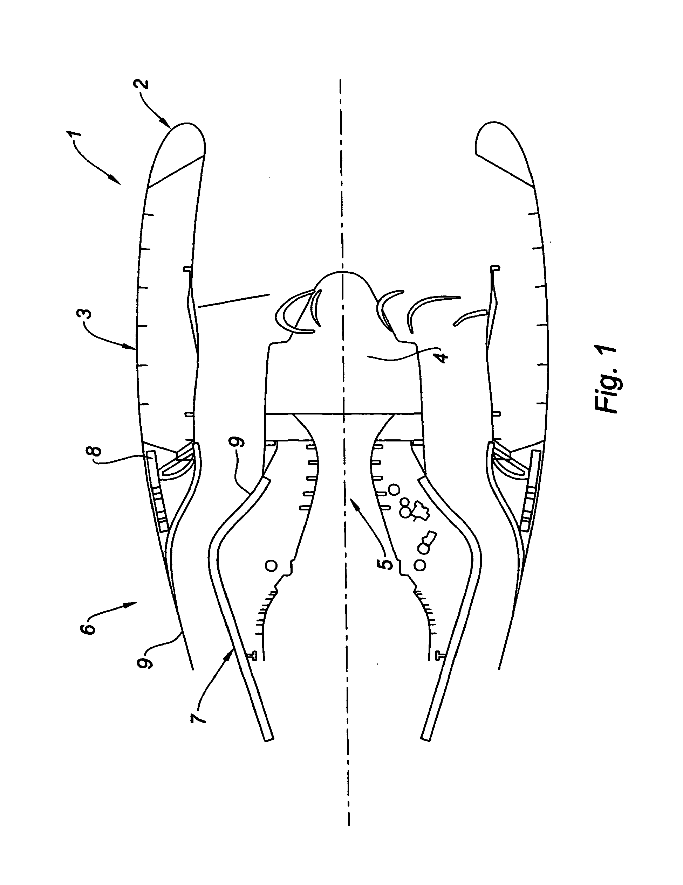

Comme représenté à la figure 1, une nacelle 1 selon l'invention comprend une lèvre d'entrée d'air 2, une structure médiane 3 entourant une soufflante 4 d'un turboréacteur 5 et un ensemble aval 6. L'ensemble aval 6 est constitué d'une structure interne fixe 7 (IFS) entourant la partie amont du turboréacteur 5, d'une structure externe fixe 8 (OFS) et d'un capot mobile 9 comportant des moyens d'inversion de poussée. La structure interne fixe 7 et la structure externe fixe 8 délimitent une veine dans laquelle circule un flux d'air froid pénétrant dans la nacelle 1 de l'invention. Ainsi, le flux d'air froid et le flux d'air entourant la nacelle constitue « le flux d'air externe» qui environne la nacelle 1 de l'invention.

La nacelle 1 de l'invention comporte des éléments internes (non représentés) participant au fonctionnement du turboréacteur 5 ou de la nacelle 1 de l'invention. Une partie de ces éléments sont alimentés par des tuyaux de surpression (non représentés) dans lesquels circule de l'air sous pression.

La trappe de l'invention permet d'évacuer l'air en surpression issu de l'éclatement d'un ou de plusieurs de ces tuyaux.

La trappe de surpression est destinée à être montée sur une paroi externe à la nacelle 1 de l'invention. La paroi est destinée à être au contact du flux d'air externe, non en surpression. En particulier, la paroi peut être la paroi externe à la nacelle, à savoir la paroi en contact avec le flux d'air dévié autour de la nacelle 1 de l'invention comme la paroi externe du capot mobile 9 ou de la structure médiane 3 ou encore la paroi interne en contact avec le flux d'air froid pénétrant la nacelle de l'invention comme la paroi interne de l'IFS 7.

La trappe de l'invention comporte un support destiné à être fixé sur la paroi externe et au moins un élément d'évacuation mobile par rapport à ce dernier. La trappe de l'invention comprend au moins une partie présentant une résistance mécanique plus faible que le reste de la trappe de surpression de manière à évacuer l'air en surpression à l'intérieur de la nacelle 1 de l'invention lorsque la valeur de la pression interne exercée sur ladite trappe atteint sensiblement une valeur de pression seuil inférieure à la pression maximale supportée par la structure de la nacelle 1 de l'invention. De manière préférentielle, la ou les parties sont aptes à se déformer ou à rompre de sorte à permettre que le ou les éléments d'évacuation puissent évacuer l'air en surpression à l'intérieur de la nacelle de l'invention lorsque la valeur de la pression exercée sur le ou les éléments d'évacuation atteint la valeur de pression seuil. Le ou les éléments d'évacuation peuvent comprendre la ou les parties de résistance mécanique plus faible.

Ainsi, la paroi externe présentant une résistance mécanique plus importante que cette des parties de la trappe de l'invention, ladite paroi n'est pas endommagée par la surpression en cas de rupture de tuyau de surpression. Il n'est donc pas nécessaire de réparer une partie de la paroi externe qui aurait été endommagée mais de remplacer, le cas échéant, la trappe de l'invention par une trappe identique non endommagée. La durée de réparation au sol est alors de manière avantageuse raccourcie.

De plus, la taille de la trappe de l'invention est réduite par rapport à l'art antérieur car il n'es plus nécessaire que la quasi majorité de la surface supporte la surpression. Seule la zone affaiblie mécaniquement coreespondant à la ou les parties rompt dès qu'une valeur de pression interne atteint celle de la pression seuil. Par conséquent, une telle réduction de la dimension de la trappe de l'invention permet un gain de masse, de composants et de coût de fabrication.

La valeur de la pression seuil est notamment comprise entre 0,01 baret 0, 25 bar, voire entre 0,015 bar et 0,20 bar, de préférence entre 0,02 bar et 0,15 bar

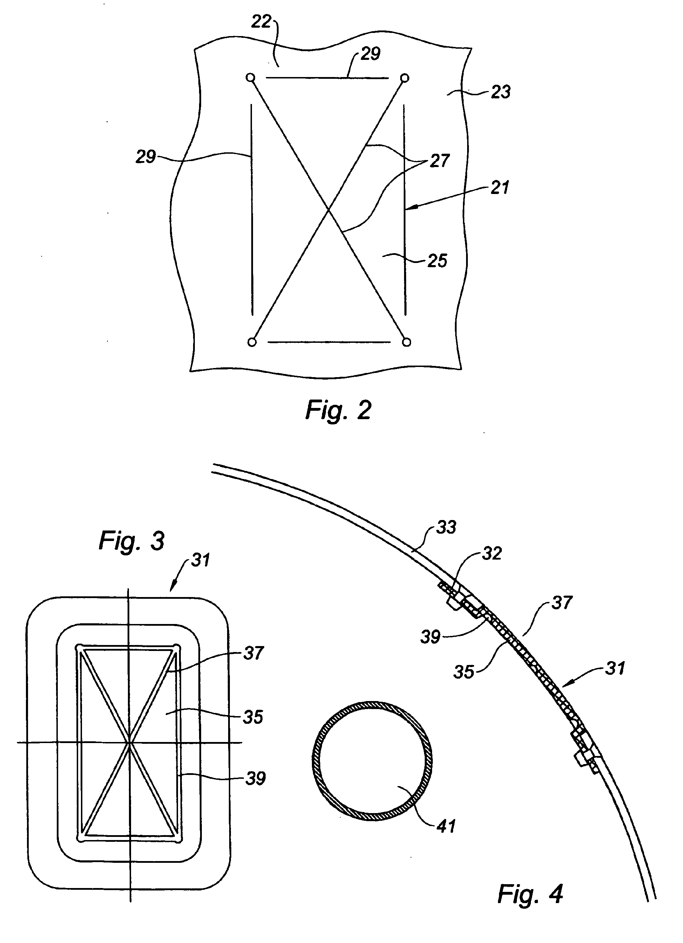

Selon un premier mode de réalisation représenté à la figure 2, le support 22 de la trappe 21 de l'invention est intégré dans la structure même de la paroi externe 23 de la nacelle 1 de l'invention, notamment du capot mobile 9 ou de la structure médiane 3. A cet effet, la paroi externe 23 est réalisée en plusieurs couches de tissus, tels que du tissus de verre, ce qui permet de simplifier la mise en oeuvre de la trappe 21 de l'invention.

Il est possible qu'une couche de treillis en surface surmonte la trappe 21 de l'invention afin de conserver la capacité de la surface de ladite trappe 21 à résister à un impact de fourdre. Ladite couche peut présenter une découpe sensiblement croisée.

La paroi externe 23 et la trappe 21 de l'invention présentent une surface externe en continuité de sorte à assurer un lissage aérodynamique.

La paroi externe 23 intégrant la trappe 21 de l'invention peut présenter une disposition spécifique des couches de tissus par tout moyen connu de l'homme du métier. Ainsi, certaines zones peuvent comporter des découpes complètes ou partielles des couches de tissus formant ainsi une ou plusieurs parties de résistance mécanique plus faible. D'autres zones peuvent ne pas en comporter afin d'assurer l'intégrité mécanique de la nacelle 1 de l'invention.

Ainsi, les zones au moins partiellement découpées définissent un ou plusieurs éléments d'évacuation délimités par au moins une partie de résistance mécanique plus faible par rapport au reste de la nacelle 1 de l'invention. Dans le mode de réalisation représenté à la figure 2, la ou les parties de résistance plus faible sont des lignes de découpe 27 aptes à rompre en cas de surpression en définissant au moins un panneau 25 comme élément(s) d'évacuation.

Les lignes de découpe 27 peuvent être disposées en croix comme représenté à la figure 2 ou selon tout autre motif adapté et connu de l'homme du métier.

En outre, dans ce mode de réalisation, au moins une ligne de pliage 29 est également prévu pour permettre le pivotement du ou des panneaux 25 par rapport au support 22. La ou les lignes de pliage 29 présentent une résistance mécanique plus importante que les lignes de découpe 27 afin de ne pas perdre d'élément(s) d'évacuation 25 de la trappe de l'invention lorsque l'aéronef est en vol.

De manière générale, le choix d'une rupture ou d'une déformation détermine la nature du matériau employé pour réaliser la ou les parties et le ou les éléments d'évacuation de la trappe de l'invention. Si une rupture est envisagée, le matériau utilisé est dur et cassant ; en revanche, si une déformation est voulue, un matériau moins dur est privilégié. Ainsi de préférence, le ou les éléments d'évacuation 25 de la trappe de l'invention est réalisée dans un matériau thermoplastique, notamment du polypropylène éventuellement renforcé par 20% à 30 % en masse de fibres de verre ou de mica. Une résistance au choc peut être améliorée en ajoutant 20% à 40 % en masse d'un élastomère tel que du polyacrylate de butyle.

Dans le cas d'une trappe 21 de l'invention intégrée dans une paroi externe 23, la paroi externe peut être également réalisée dans le même matériau thermoplastique que celui du ou des éléments d'évacuation 25 de la trappe de l'invention.

Dans le cas où la trappe 21 de l'invention et/ou la paroi externe 23 sont réalisées dans un matériau thermoplastique, ladite trappe 21 et/ou ladite paroi 23 sont obtenues notamment par moulage.

Selon un autre mode de réalisation représenté à la figure 3, la trappe 31 de l'invention comprend au moins un élément d'évacuation sous la fomre d'un panneau 35 comprenant une ligne de fatigue 37 apte à rompre lorsque la valeur de la pression exercée sur le panneau 35 atteint la valeur de pression seuil. Ainsi, on évite tout risque d'ouverture intempestif de la trappe 31.

Comme représenté à la figure 4, la trappe de l'invention 31 est rapportée par le support 32 sur une paroi externe 33 par tout moyen connu de l'homme du métier, notamment par un ou plusieurs rivets. La ou les lignes de fatigue 37 sont, de préference réalisées par des rainures internes plus ou moins profondes suivant le niveau de rupture attendu.

Une ou plusieurs lignes charnières 39 sont également formées afin de permettre le pivotement du ou des panneaux 35 autour du support 32.

La ou les lignes de fatigue 37 destinées à rompre sont moins résistantes mécaniquement que la ou les rainures charnières 39.

Typiquement, les lignes de fatigue 37 sont disposées vers le centre de la trappe 31 de l'invention alors que la ou les lignes charnières 49 sont disposées sensiblement à la périphérie de ladite trappe 31 de sorte à permettre que le panneau 35 pivote par rapport au support 32 autour des lignes charnières 39 lorsque la valeur de la pression exercée sur le panneau 35 atteint la valeur de pression seuil.

Les lignes de fatigure 37 et/ou charnières 39 peuvent être réalisées sous la forme de rainure.

La ou les rainures sont dirigées de sorte à être au contact de l'air en surpression. Autrement dit, la ou les rainures sont dirigées radialement vers l'extérieure de la nacelle 1 de l'invention. Ainsi, avant que la ou les lignes de fatigue 37 ne rompent au niveau de la rainure correspondante, la surface externe de la trappe 31 de l'invention se confond avec les lignes aérodynamiques de la structure de la nacelle 1 de l'invention.

La ou les rainures peuvent être continues ou partielles avec une épaisseur continue ou évolutive.

La ou les rainures peuvent être de toute forme, notamment de section transversale sensiblement triangulaire ou circulaire.

La rainure formant une ligne de fatigue 37 est plus profonde que celle formant la ligne charnière 39 de sorte que la première rainure rompent à une pression plus faible que la deuxième rainure. Ainsi, la résistance à la surpression d'une rainure dépend de l'épaisseur de matière restante associée à la longueur de la rainure. Dans le cas où la section transversale de la rainure est sensiblement circulaire, un important rayon de la rainure, à savoir notamment supérieur à 3 mm, permet de limiter la concentration des efforts sur la rainure et ainsi d'augmenter la résistance mécanique.

Typiquement, l'épaisseur de fond d'une rainure d'une ligne de fatigue 37 est comprise entre 1 mm et 3 mm, voire entre 2 mm et 5 mm.

Typiquement, l'épaisseur de fond d'une rainure d'une ligne charnière 39 est comprise entre 2 mm et 4 mm, voire entre 3 mm et 6 mm.

La surface externe de la trappe 31 de l'invention peut recevoir un traitement comme un treillis pour supporter et diffuser une forte charge électrique, par exemple provenant de la foudre. La continuité électrique avec la structure de la paroi externe 33 peut être relayée par les fixations de la trappe 31 de l'invention.

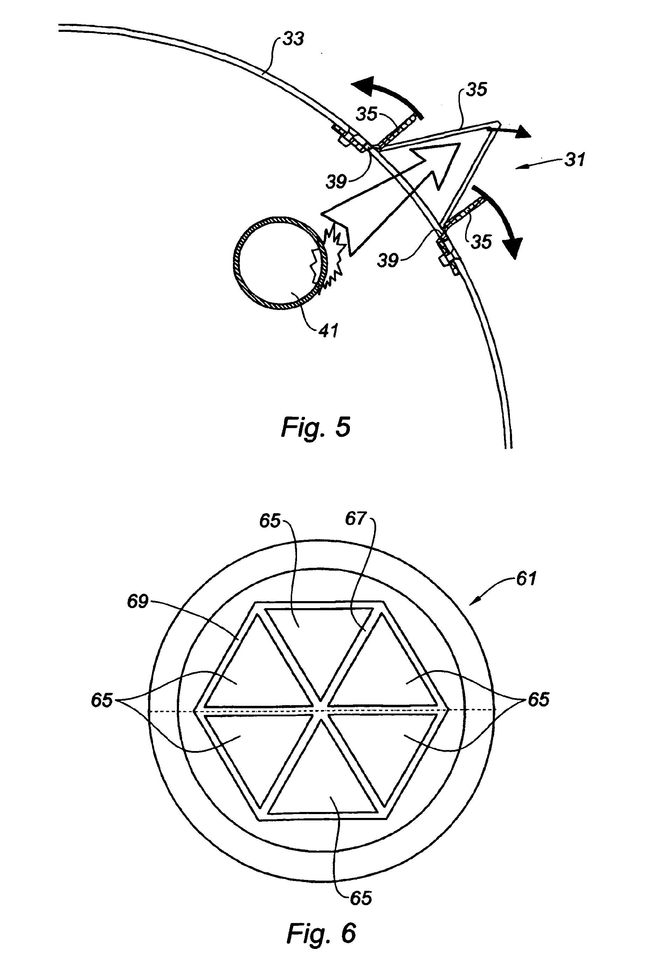

Comme représenté à la figure 5, lors de l'éclatement d'une tuyauterie 41 à l'intérieur de la nacelle 1 de l'invention, une surpression envahit l'intérieur de ladite nacelle 1. La pression se répartit alors uniformément. Comme la ou les lignes de fatigue 37 présentent une résistance mécanique plus faible que le reste de la structure, le ou les éléments d'évacuation 35 s'ouvre autour de la ou des lignes charnières 39 après que la ou les lignes de fatigue 37 se soient déchirées au niveau de leur rainure.

De manière générale, chaque élément d'évacuation 25, 35 de la trappe de l'invention peut présenter toute forme et toute dimension adaptées et connues de l'homme du métier, notamment des formes de type triangulaire, hexagonale, octagonale. La diminuation de la surface de l'élément d'évacuation 25, 35 permet de diminuer la vitesse d'action de la pression sur lesdits éléments 25, 35. Ainsi, la ou les parties 27, 37 de résistance mécanique faible tiennent plus longtemps avant de rompre.

Selon le mode de réalisation représenté à la figure 6, la trappe 61 de l'invention comporte des lignes de fatigue 67 et des lignes charnières 69 définissant sensiblement un hexagone formé de six éléments d'évacuation, sous la forme de six panneaux 65.

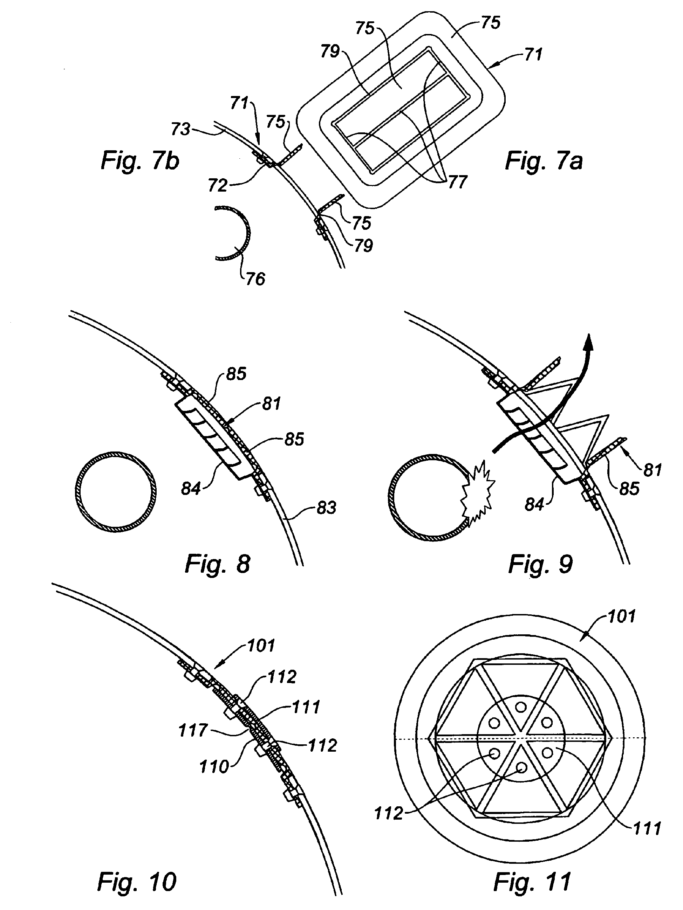

Selon le mode de réalisation représenté à la figure 7a, la trappe 71 de l'invention comporte un support 72 fixé sur la paroi externe 73 de la nacelle de l'invention par tout moyen connu de l'homme du métier et plusieurs éléments d'évacuation 75. Dans ce cas, les éléments d'évacuation 75 sont des pannneaux longitudinaux 75 orientés sensiblement selon le flux d'air externe. De ce fait, les parties de résistance mécanique faible 77 délimitent avec les lignes charnières 79 les panneaux 75. Les parties 77 sont sous la forme de lignes de fatigue 77 aptes à rompre dont au moins une est orientée sensiblement selon le flux d'air externe à la nacelle. Ainsi, les panneaux longitudinaux 75 sont orientés de sorte à être alignés avec le vent généré par ledit flux d'air à l'extérieur de la nacelle 1 de l'invention. Les lignes charnières 79 autour desquelles les panneaux longitudinaux 75 sont aptes à pivoter sont également orientés sensiblement longitudinalement selon le sens du flux d'air en surpression.

Ainsi, comme représenté à la figure 7b, lors de l'éclatement d'une ou de plusieurs tuyauteries de surpression 76 à l'intérieur de la nacelle 1 de l'invention, les panneaux 75 s'ouvrent et sont alignés avec la direction du flux d'air externe à la nacelle 1 de l'invention. Ainsi, on évite que des éléments de la trappe 71 de l'invention ne se referment ou battent en vol.

Typiquement, les lignes de fatigue 77 et les lignes charnières 79 sont des rainures de profondeur différentes comme celles décrites plus haut.

De manière générale, après un éclatement de tuyauterie de surpression, le turboréacteur peut continuer de fonctionner en alimentant en air sous pression l'intérieur de la nacelle 1 de l'invention. Il est possible de contrôler au moins une partie du flux d'air sous pression à l'intérieur de la nacelle 1 de l'invention par un guidage du flux dans une direction souhaitée. Le guidage de flux peut être réalisé par un système de grilles associé à au moins une trappe de l'invention. Ainsi, les performances aérodynamiques de la nacelle 1 de l'invention sont moins impactées par une sortie brute d'air en surpression. Selon le mode de réalisation des figures 8 et 9, la trappe de l'invention 81 couvre sensiblement une telle grille 84 destinée à être montée à l'intérieur de la nacelle 1 de l'invention en contact avec le flux d'air en surpression,, ladite grille 84 étant configurée pour diriger une partie du flux d'air en surpression vers l'extérieur de ladite nacelle 1 de l'invention. Pour cela, ladite grille 84 peut comprendre une multitude d'ailettes espacées présentant une forme allant dans le sens du flux d'air.

La grille 84 peut être rapportée et fixée avec la trappe de l'invention 81 par tout moyen connu par l'homme du métier, notamment par un ou plusieurs rivets.

Selon une variante, la grille 84 est rapportée de manière indépendante de la trappe 81 de l'invention sur la paroi externe 83 de la nacelle 1 de l'invention ou sur un élément situé à l'intérieur de ladite nacelle 1.

La grille 84 peut être encore intégrée à la structure de la trappe 81 de l'invention de sorte à former une pièce monobloc.

Les grilles 84 peuvent être réalisées dans un matériau métallique, tel que aluminium permettant d'appliquer une protection foudre accrue vis-à-vis de de la partie interne de la structure de la nacelle 1 de l'invention après une ouverture des éléments d'évacuation, en l'ocurrence des panneaux 85. Ainsi, si la foudre frappe dans la zone de la trappe 81 de l'invention, l'impact de la foudre peut se situer soit sur les extrémités des panneaux 85 reliées à la masse de la nacelle 1 de l'invention, soit sur la grille 84 servant alors de diffuseur vers la structure de la paroi externe 83.

La trappe de l'invention 21, 31, 61, 71 et 81 peut être employée pour servir d'accès d'urgence à des éléments internes à la nacelle 1 de l'invention. Ainsi, la trappe de l'invention 21, 31, 61, 71 et 81 peut être sacrifiée au niveau des parties de résistance mécanique plus faible 27, 37, 67 et 77 pour accéder à des équipements internes à la nacelle 1, comme des vérins ou des verrous afin de pouvoir déverrouiller ces éléments en cas de panne de l'un deux par exemple.

A cet effet, il est possible d'apposer un placard sur la surface externe de la trappe de l'invention 21, 31, 61, 71 et 81 pour indiquer le point d'impact à appliquer pour percer ladite trappe 21, 31, 61, 71 et 81 et ainsi accéder aux éléments considérés.

La trappe de l'invention peut en outre être réparée de manière provisoire afin d'éviter que l'aéronef ne soit immobilisé au sol.

Selon le mode de réalisation des figures 10 et 11, la trappe 101 de l'invention est prise en sandwich entre une plaque interne 110 destinée à être montée vers l'intérieur de la nacelle 1 de l'invention en contact avec le flux d'air en surpression et une plaque externe 111 destinée à être montée vers l'extérieur de la nacelle 1 de l'invention en contact avec le flux d'air exteme.Lesdites plaques interne 110 et externe 111 sont fixées par des moyens de fixation 112 au travers de ladite trappe 101 de l'invention. Comme moyens de fixation 112, on peut citer des rivets.

De manière préférée, la plaque interne 110 comporte au moins un élément de rupture 117 apte à rompre lorsque la valeur de la pression interne exercée sur la trappe 101 de l'invention atteint sensiblement la valeur de pression seuil ce qui participe à l'évacuation de l'air sous pression. L'élément de rupture 117 peut être une ligne de fatigue apte à rompre lorsque la valeur de la pression exercée sur le panneau interne 110 atteint la valeur de pression seuil. La ligne de fatigue peut être constituée d'une rainure comme celles décrites précédemment, ladite rainure ayant une profondeur suffisante pour rompre lorsque la valeur de la pression interne atteint celle de la pression seuil. La ligne de fatigue peut également être constituée par entuilage, à savoir par chevauchement des extrémités latérales de deux parties constituant la plaque interne 110.

La plaque externe 111 peut également comporter de tel(s) éléments(s) de rupture.

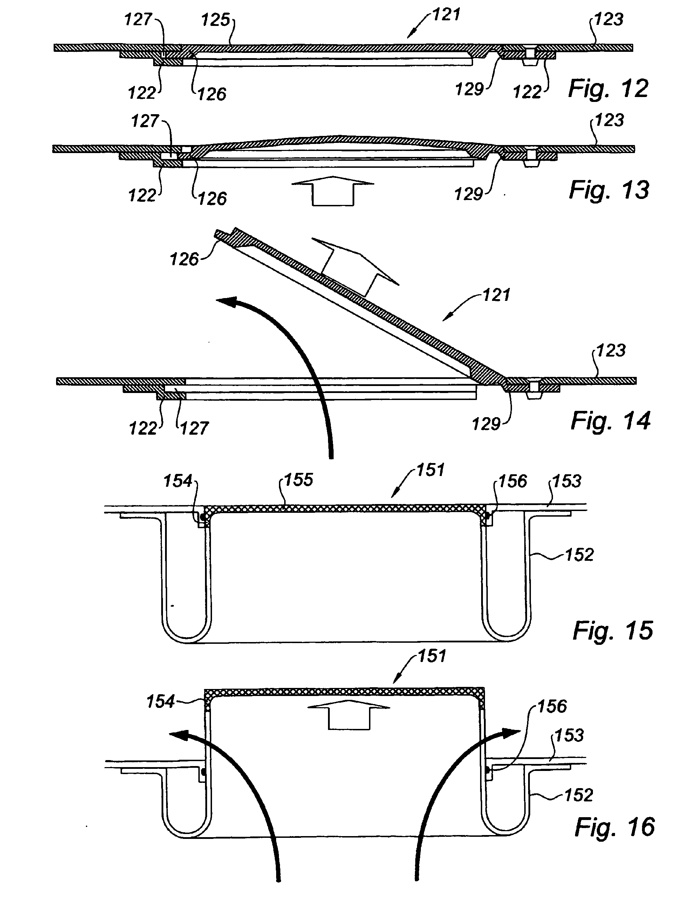

Selon un autre mode de réalisation représenté aux figures 12 à 14, la trappe de l'invention 121 comporte un support 122 apte à être fixé sur la paroi externe 123 de la nacelle 1 de l'invention et un ou plusieurs éléments d'évacuation sous la forme d'une porte 125 aptes à se déformer de manière élastique pour se dégager du support 122 lorsque la valeur de la pression interne exercée sur ladite trappe 121 atteint sensiblement la valeur de pression seuil. Par « élastique », on entend une déformation au cours de laquelle l'élément d'évacuation est apte à reprendre sensiblement à leur configuration de repos.

La porte 125 peut être fabriquée dans un matériau polymère, tel que du polyéthylène qui permet une déformation élastique optimale de ladite porte 125.

Selon le mode de réalisation des figures 12 à 14, la porte 125 forme un élément monobloc avec le support 122 sur un premier côté latéral. Selon un autre mode de réalisation, la porte 125 peut être fixée au support 122 par tout moyen connu de l'homme du métier. La porte 125 présente sur un deuxième côté latéral une excroissance 126 apte à venir s'encastrée dans une fente 127 prévue à cet effet dans le support 122.

Comme représenté aux figures 13 et 14, lors d'une augmentation de la pression interne supérieure ou égale à la valeur de pression seuil, la porte 125 se déforme en libérant l'excroissance 126 de la fente 127 ce qui provoque l'ouverture de ladite porte 125.

La porte 125 pivote donc par rapport au support 123 autour d'une ligne charnière 129. Il est possible que la porte 125 pivote autour de tout autre moyen adapté à cet effet connu de l'homme du métier.

La ligne charnière 129 peut être formée par une rainure comme celles décrites plus haut.

Le sens d'ouverture de la porte 125 est fonction de l'effet recherché. Elle peut se faire de sorte que le flux d'air sous pression libéré est dans la direction de l'avancement en plein vol de l'aéronef afin d'impacter le moins possible les performances aérodynamiques de l'ensemble propulsif.

Selon une variante représentée aux figures 15 et 16, il est possible que la trappe 151 de l'invention fonctionne comme un clapet en cas d'éclatement d'un ou de plusieurs tuyauxs de surpression interne. La trappe 151 de l'invention comporte une partie centrale 155 et une partie latérale 152 faisant office de support, la partie latérale 152 étant apte à se déformer de sorte à permettre le soulèvement de la partie centrale 155 à la manière d'un clapet afin d'évacuer l'air en surpression. Pour ce faire, la trappe 151 de l'invention peut être réalisée dans un matériau souple autorisant une déformation dans la zone voulue, notamment au niveau de la partie latérale 152. A cet effet, on peut citer du polypropylène. Il est également possible d'employer un matériau dont la résilience permet le retour de la trappe 151 de l'invention à la position de fermeture. A cet effet, on peut citer tout acier ou bronze à ressort connu de l'homme du métier.

La partie centrale 155 surmonte un retour périphérique 154 sensiblement perpendiculaires à la partie centrale 155 et aptes à permettre en position de fermeture une liaison étanche entre la trappe 151 de l'invention et la paroi externe 153. La liaison étanche peut être assurée par des joints 156.

La trappe 151 de l'invention peut être réalisée de manière monobloc ou avoir une ou plusieurs pattes de déformation rapportées. Dans ce cas, les matériaux dans lesquels la trappe 151 de l'invention et la ou les pattes de déformation sont fabriqués peuvent être différents.

En position de fermeture représentée à la figure 15, la surface externe de la trappe 151 de l'invention forme une continuité aérodynamique avec la paroi externe 153 dans la mesure où, d'une part, le retour périphérique 154 sont encastrées dans la parois externe 153 et, d'autre part, la surface externe de la partie centrale 155 est sensiblement en continuité avec ladite paroi 153. Lors d'une surpression interne, la pression uniformément répartie sur la surface interne de la partie centrale 155 soulève cette dernière. Ainsi, l'air en surpression présent à l'intérieur de la nacelle 1 de l'invention s'échappe par les orfice délimités par le retour périphérique 154 et la paroi externe 153 en fournissant des opercules d'échappement à l'air en surpression.

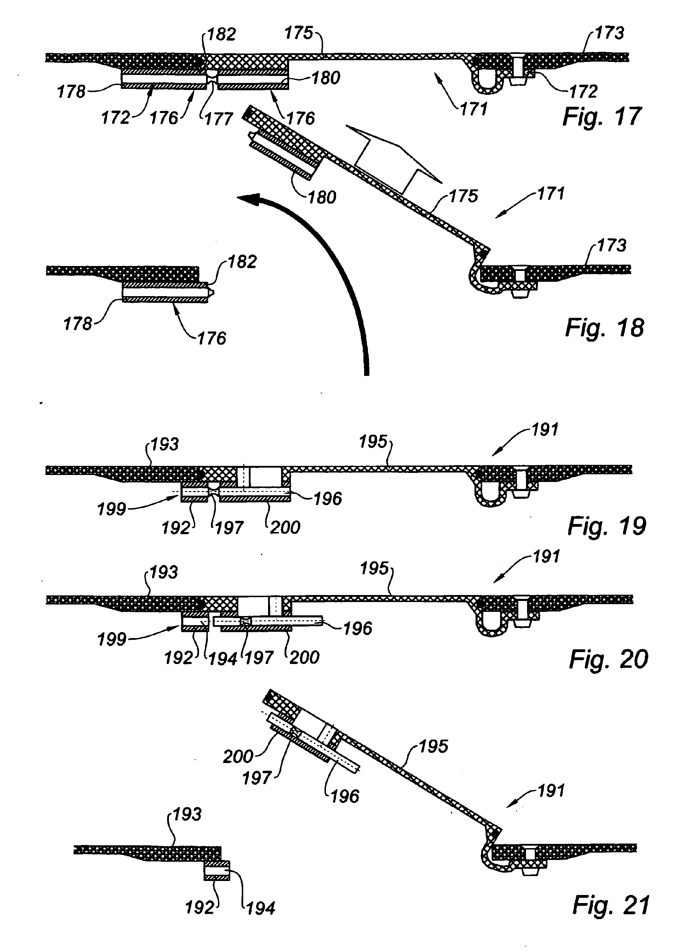

Selon un autre mode de réalisation représenté aux figures 17 et 18, la trappe 171 de l'invention comporte un support 172 monté par tout moyen connu de l'homme du métier sur la paroi externe 173. La trappe 171 de l'invention comporte également au moins un élément d'évacuation sous la forme d'une porte 175 dont le système de verrouillage 176 comporte au moins un élément de rupture apte à rompre lorsque la valeur de la pression exercée sur ladite trappe atteint sensiblement la valeur de pression seuil. Ainsi, il est possible d'accéder en cas d'urgence aux équipements situés à l'intérieur de la nacelle 1 de l'invention. Dans le mode de réalisation représenté aux figures 17 et 18, le support 172 est formé par un prolongement d'un côté latéral de la porte 175. Selon un autre mode de réalisation, il est possible que la porte 175 soit rapportée par tout moyen connu de l'homme du métier sur le support 172. La porte 175 est mobile par pivotement autour d'une charnière intégrée à la porte 175 ou rapportée à cette dernière comme les systèmes de type gond-charnière.

Le système de verrouillage 176 peut être formé d'une première partie 178 et d'une deuxième partie 180 séparées par une rainure fusible 177 correspondant à l'élément de rupture, lorsque la valeur de la pression exercée sur la trappe 171 de l'invention atteint sensiblement la valeur de pression seuil. La première partie 178 est fixée par tout moyen connu de l'homme du métier sur la paroi externe 173 et la deuxième partie 180 est fixée par tout moyen connu de l'homme du métier à la porte 175. Le support 172 est également formé d'une première partie 178 du système de verrouillage 176.

Ainsi, en position de fermeture, lorsque la porte 175 n'est pas soumise à une pression égale ou supérieure à la valeur de la pression seuil, le système de verrouillage 176 maintient la porte fermée de sorte à assurer une continuité aérodynamique avec la paroi externe 173. La fermeture peut être rendue étanche par la présence d'un ou de plusieurs joints.

L'élément de rupture 177 peut être réalisé dans tout matériau adpaté et connu de l'homme du métier, notamment dans un matériau métallique, tel que l'acier inoxydable 15-5PH ou l'inconel®.

Comme représenté aux figures 17 et 18, la première partie 178 peut présenter une avancée 182 de sorte à permettre le maintient de la porte 175 sensiblement en alignement avec la paroi externe 173.

Comme représenté à la figure 18, lorsque la pression interne exercée sur la porte 175 atteint la valeur de la pression seuil, la force exercée par la pression agissant sur la surface interne de la porte 175 procure un effort de cisaillement au niveau de la rainure fusible 177 qui se rompt en séparant alors la première partie 178 avec la deuxième partie 180. La porte 175 n'est donc plus maintenue en position de fermeture et passe donc en position d'ouverture de sorte à permettre l'évacuation de l'air en surpression.

Il est possible de réparer la trappe 171 de l'invention en démontant le système de verrouillage 176 scindé en deux parties par un système de verrouillage identique présentant une rainure fusible rattachant la première partie 178 et la deuxième partie 180.

Dans la variante représentée aux figures 19 à 21, l'élément de rupture 197 de la trappe 191 de l'invention est intégré dans une languette 196 apte à coulisser dans un logement 194 correspondant fixé dans le support 192 formant un système de verrouillage 199. Le support 192 est fixé par tout moyen connu de l'homme du métier à la paroi externe 193. Comme précédemment, la partie 200 du système de verrouillage intégrant la languette 196 et l'élément de rupture 197 est fixée sur la porte 195 formant un élément d'évacuation. Un joint est placé entre la porte 195 et la paroi externe 193 de sorte à assurer l'étanchéité en position de fermeture.

L'élément de rupture 197 peut être réalisé dans tout matériau adpaté et connu de l'homme du métier, notamment dans un matériau métallique, tel que l'acier inoxydable 15-5PH ou l'inconel®.

Ainsi, la trappe 191 de l'invention peut être employée à la fois comme une trappe de visite et comme une trappe de surpression.

Selon un mode de réalisation non représenté, la nacelle 1 de l'invention comporte une pluralité de trappes 21 ; 31 ; 61 ; 71 ; 81 ; 101 ; 121 ; 151 ; 171 ; 191 de l'invention telles que décrites précédemment qui sont aptes à évacuer de l'air en surpression à l'intérieur de la nacelle 1 à différentes valeurs de pression seuil.

## Revendications

1. Trappe de surpression (21 ; 31 ; 61 ; 71 ; 81 ; 101 ; 121 ; 151 ; 171 ; 191) destinée à être montée sur une paroi (23 ; 33 ; 63 ; 73 ; 83 ; 103 ; 123 ; 153 ; 173 ; 193) d'une nacelle (1) pour turboréacteur (5), la trappe de surpression (21 ; 31 ; 61 ; 71 ; 81 ; 101 ; 121 ; 151 ; 171 ; 191) comportant un support (22 ; 32 ; 62 ; 72 ; 82 ; 102 ; 122 ; 152 ; 172 ; 192) destiné à être fixé sur la paroi (23 ; 33 ; 63 ; 73 ; 83 ; 103 ; 123 ; 153 ; 173 ; 193) et au moins un élément d'évacuation (25 ; 35 ; 65 ; 75 ; 85 ; 105 ; 125 ; 155 ; 175 ; 195) mobile par rapport audit support (22 ; 32 ; 62 ; 72 ; 82 ; 102 ; 122 ; 152 ; 172 ; 192) et apte à évacuer de l'air en surpression à l'intérieur de la nacelle (1), **caractérisée en ce qu'**elle (21 ; 31 ; 61 ; 71 ; 81 ; 101 ; 121 ; 151 ; 171 ; 191) comprend au moins une partie (27 ; 37 ; 67 ; 77 ; 125 ; 152 ; 177 ; 197) présentant une résistance mécanique plus faible à la déformation ou à la rupture que le reste de la trappe de surpression (21 ; 31 ; 61 ; 71 ; 81 ; 101 ; 121 ; 151 ; 171 ; 191) de sorte que le ou les éléments d'évacuation (25 ; 35 ; 65 ; 75; 85 ; 105 ; 125 ; 155 ; 175 ; 195) puissent évacuer ladite air en surpression lorsque la valeur de la pression interne exercée sur ladite trappe (21 ; 31; 61 ; 71 ; 81 ; 101; 121 ; 151; 171 ; 191) atteint sensiblement une valeur de pression seuil inférieure à la pression maximale supportée par la structure de la nacelle (1).

2. Trappe (21 ; 31 ; 61 ; 71 ; 81 ; 101 ; 121 ; 151 ; 171 ; 191) selon la revendication précédente, **caractérisée en ce que** la valeur seuil est comprise entre 0,02 bar et 0,15 bar.

3. Trappe (21) selon l'une quelconque des revendications précédentes, **caractérisée en ce qu'**au moins un élément d'évacuation comprend un panneau (25) présentant au moins une ligne de découpe (27) apte à rompre lorsque la valeur de la pression exercée sur le panneau (25) atteint la valeur de pression seuil, et une ligne de pliage (29) autour de laquelle ledit panneau (25) est mobile en rotation.

4. Trappe (31 ; 61 ; 71 ; 81) selon l'une quelconque des revendications 1 ou 2, **caractérisée en ce qu'**au moins un élément d'évacuation comprend un panneau (35 ; 65 ; 75 ; 85) comprenant une ligne de fatigue (37 ; 67 ; 77 ; 87) apte à rompre lorsque la valeur de la pression exercée sur le panneau (35 ; 65 ; 75 ; 85) atteint la valeur de pression seuil et une ligne de pliage (39 ; 69 ; 79 ; 89) autour de laquelle le panneau (35 ; 65 ; 75 ; 85) est mobile en rotation.

5. Trappe (31 ; 61 ; 71 ; 81) selon la revendication précédente, **caractérisée en ce que** la ligne de fatigue (37 ; 67 ; 77 ; 87) est composée d'une rainure dirigée de sorte à être au contact de l'air en surpression.

6. Trappe (171 ; 191) selon l'une quelconque des revendications 1 ou 2, **caractérisée en ce qu'**un élément d'évacuation est une porte (175 ; 195) dont le système de verrouillage (176 ; 199) comporte au moins une ligne de fatigue (177 ; 197).

7. Trappe (191) selon la revendication précédente, **caractérisée en ce que** la ligne de fatigue (197) est intégrée dans une languette (196) apte à coulisser dans un logement (194) correspondant fixé dans le support (192).

8. Trappe (121) selon l'une quelconque des revendications 1 ou 2, **caractérisée en ce que** le ou les éléments d'évacuation comportent au moins une porte (125) apte à se déformer de manière élastique pour se dégager du support (122) lorsque la valeur de la pression interne exercée sur ladite trappe (121) atteint sensiblement la valeur de pression seuil.

9. Trappe (101) selon l'une quelconque des revendications 1 ou 2, **caractérisée en ce qu'**elle (101) comprend une plaque interne (110) destinée à être montée vers l'intérieur de la nacelle (1) en contact avec le flux d'air en surpression et une plaque externe (111) destinée à être montée vers l'extérieur de la nacelle (1) en contact avec le flux d'air externe à la nacelle (1), lesdites plaques interne (110) et externe (111) étant fixées par des moyens de fixation (112) au travers de ladite trappe de surpression (101).

10. Trappe (101) selon la revendication précédente, **caractérisée en ce que** la plaque interne (110) comporte au moins un élément de rupture (117) apte à rompre lorsque la valeur de la pression interne exercée sur la trappe (101) atteint sensiblement la valeur de pression seuil.

11. Trappe (101) selon la revendication précédente, **caractérisée en ce que** l'élément de rupture (117) est une rainure apte à rompre lorsque la valeur de la pression exercée sur le panneau interne (110) atteint la valeur de pression seuil.

12. Trappe (151) selon l'une quelconque des revendications 1 ou 2, **caractérisée en ce qu'**elle (151) comporte une partie centrale (155) et une partie latérale (152), la partie latérale (152) étant apte à se déformer de sorte à permettre le soulèvement de la partie centrale (155) à la manière d'un clapet afin d'évacuer l'air en surpression.

13. Trappe (81) selon l'une quelconque des revendications précédentes, **caractérisée en ce qu'**elle (81) couvre sensiblement une grille (84) destinée à être montée à l'intérieur de la nacelle (1) en contact avec le flux d'air en surpression, ladite grille (84) étant configurée pour diriger une partie du flux d'air en surpression vers l'extérieur de la nacelle (1).

14. Trappe (21 ; 31 ; 61 ; 71 ; 81 ; 101 ; 121 ; 151 ; 171 ; 191) selon l'une quelconque des revendications précédentes, **caractérisée en ce que** le ou les éléments d'évacuation (25 ; 35 ; 65 ; 75 ; 85 ; 125 ; 155 ; 175 ; 195) et/ou la ou les parties (27 ; 37 ; 67 ; 77 ; 152 ; 177 ; 197) sont réalisés dans un matériau thermoplastique ou dans un matériau métallique.

15. Nacelle (1) pour turboréacteur (5), **caractérisée en ce qu'**elle comporte au moins une trappe (21 ; 31 ; 61 ; 71 ; 81 ; 101 ; 121 ; 151 ; 171 ; 191) selon l'une quelconque des revendications précédentes.

16. Nacelle (1) selon la revendication précédente, **caractérisée en ce qu'**elle comporte une pluralité de trappes (21 ; 31 ; 61 ; 71 ; 81 ; 101 ; 121 ; 151 ; 171 ; 191) selon l'une quelconque des revendications 1 à 15 aptes à évacuer de l'air en surpression à l'intérieur de la nacelle (1) à différentes valeurs de pression seuil.

## Claims

1. An overpressure hatch (21; 31; 61; 71; 81; 101; 121; 151; 171; 191) intended to be mounted on a wall (23; 33; 63; 73; 83; 103; 123; 153; 173; 193) of a nacelle (1) for a turbojet engine (5), the overpressure hatch (21; 31; 61; 71; 81; 101; 121; 151; 171; 191) including a support (22; 32; 62; 72; 82; 102; 122; 152; 172; 192) intended to be attached on the wall (23; 33; 63; 73; 83; 103; 123; 153; 173; 193) and at least one discharge element (25; 35; 65; 75; 85; 105; 125; 155; 175; 195) moveable relatively to said support (22; 32; 62; 72; 82; 102; 122; 152; 172; 192) and able to discharge overpressure air inside the nacelle (1), **characterized in that** it (21; 31; 61; 71; 81; 101; 121; 151; 171; 191) comprises at least one portion (27; 37; 67; 77; 125; 152; 177; 197) having a lower mechanical resistance to deformation or to failure than the remainder of the overpressure hatch (21; 31; 61; 71; 81; 101; 121; 151; 171; 191) so that the discharge element(s) (25; 35; 65; 75; 85; 105; 125; 155; 175; 195) may discharge said overpressure air when the value of the internal pressure exerted on said hatch (21; 31; 61; 71; 81; 101; 121; 151; 171; 191) substantially reaches a threshold pressure value below the maximum pressure supported by the structure of the nacelle (1).

2. The hatch (21; 31; 61; 71; 81; 101; 121; 151; 171; 191) according to the preceding claim, **characterized in that** the threshold value is comprised between 0.02 bars and 0.15 bars.

3. The hatch (21) according to any of the preceding claims, **characterized in that** at least one discharge element comprises a panel (25) having at least one cut-out line (27) capable of breaking when the value of the pressure exerted on the panel (25) reaches the threshold pressure value, and a folding line (29) around which said panel (25) is moveable in rotation.

4. The hatch (31; 61; 71; 81) according to any of claims 1 or 2, **characterized in that** at least one discharge element comprises a panel (35; 65; 75; 85) comprising a fatigue line (37; 67; 77; 87) capable of breaking when the value of the pressure exerted on the panel (35; 65; 75; 85) reaches the threshold pressure value and a folding line (39; 69; 79; 89) around which the panel (35; 65; 75; 85) is movable in rotation.

5. The hatch (31; 61; 71; 81) according to the preceding claim, **characterized in that** the fatigue line (37; 67; 77; 87) consists of an oriented groove so as to be in contact with the overpressurized air.

6. The hatch (171; 191) according to any of claims 1 or 2, **characterized in that** a discharge element is a door (175; 195), the locking system (176; 199) includes at least one fatigue line (177; 197).

7. The hatch (191) according to the preceding claim, **characterized in that** the fatigue line (197) is integrated into a tab (196) capable of sliding in a corresponding housing (194) attached in the support (192).

8. The hatch (121) according to any of claims 1 or 2, **characterized in that** said discharge element(s) include(s) at least one door (125) capable of deforming elastically so as to disengage from the support (122) when the value of the internal pressure exerted on said hatch (121) substantially attains the threshold pressure value.

9. The hatch (101) according to any of claims 1 or 2, **characterized in that** it (101) comprises an internal plate (110) intended to be mounted towards the inside of the nacelle (1) in contact with the overpressurized air flow and an external plate (111) intended to be mounted towards the outside of the nacelle (1) in contact with the air flow external to the nacelle (1), said internal (110) and external (111) plates being attached through attachment means (112) through said overpressure hatch (101).

10. The hatch (101) according to the preceding claim, **characterized in that** the internal plate (110) includes at least one breakage element (117) capable of breaking when the internal pressure exerted by the hatch (101) substantially attains the threshold pressure value.

11. The hatch (101) according to the preceding claim, **characterized in that** the breakage element (117) is a groove capable of breaking when the value of the pressure exerted on the internal panel (110) attains the threshold pressure value.

12. The hatch (151) according to any of claims 1 or 2, **characterized in that** it (151) includes a central portion (155) and a side portion (152), the side portion (152) being capable of deforming so as to allow lifting of the central portion (155) in the fashion of a valve in order to discharge the overpressurized air.

13. The hatch (81) according to any of the preceding claims, **characterized in that** it (814) substantially covers a grid (84) intended to be mounted in the inside of the nacelle (1) in contact with the overpressurized air flow, said grid (84) being configured for directing part of the overpressurized air flow towards the outside of the nacelle (1).

14. The hatch (21; 31; 61; 71; 81; 101; 121; 151; 171; 191) according to any of the preceding claims, **characterized in that** said discharge element(s) (25; 35; 65; 75; 85; 125; 155; 175; 195) and/or the portion(s) (27; 37; 67; 77; 152; 177; 197) are made in a thermoplastic material or in a metal material.

15. A nacelle (1) for a turbojet engine (5), **characterized in that** it includes at least one hatch (21; 31; 61; 71; 81; 101; 121; 151; 171; 191) according to any of the preceding claims.

16. The nacelle (1) according to the preceding claim, **characterized in that** it includes a plurality of hatches (21; 31; 61; 71; 81; 101; 121; 151; 171; 191) according to any of claims 1 to 15 capable of discharging the overpressurized air inside the nacelle (1) at different threshold pressure values.

## Patentansprüche

1. Überdruckklappe (21; 31; 61; 71; 81; 101; 121; 151; 171; 191) zur Montage auf einer Wand (23; 33; 63; 73; 83; 103; 123; 153; 173; 193) einer Gondel (1) für ein Turbotriebwerk (5), wobei die Überdruckklappe (21; 31; 61; 71; 81; 101; 121; 151; 171; 191) eine Auflage (22; 32; 62; 72; 82; 102; 122; 152; 172; 192) aufweist, die dazu bestimmt ist, auf der Wand (23; 33; 63; 73; 83; 103; 123; 153; 173; 193) befestigt zu sein und mindestens ein im Verhältnis zu der Auflage (22; 32; 62; 72; 82; 102; 122; 152; 172; 192) bewegbares Ableitungsorgan (25; 35; 65; 75; 85; 105; 125; 155; 175; 195), das imstande ist, Überdruckluft in der Gondel (1) abzuleiten, **dadurch gekennzeichnet, dass** sie (21; 31; 61; 71; 81; 101; 121; 151; 171; 191) mindestens einen Abschnitt (27; 37; 67; 77; 125; 152; 177; 197) umfasst, der einen gegenüber Verformung oder Bruch geringeren mechanischen Widerstand aufweist als der Rest der Überdruckklappe (21; 31; 61; 71; 81; 101; 121; 151; 171; 191), so dass das oder die Ableitungselement(e) (25; 35; 65; 75; 85; 105; 125; 155; 175; 195) die Überdruckluft ableiten können, wenn der Wert des Innendrucks, der auf die Klappe (21; 31; 61; 71; 81; 101; 121; 151; 171; 191) ausgeübt wird, etwa einen Druckgrenzwert erreicht, der niedriger ist als der maximale Druck, den die Struktur der Gondel (1) verträgt.

2. Klappe (21; 31; 61; 71; 81; 101; 121; 151; 171; 191) nach vorangehendem Anspruch, **dadurch gekennzeichnet, dass** der Grenzwert zwischen 0,02 bar und 0,15 bar inklusive ist.

3. Klappe (21) nach einem der vorangehenden Ansprüche, **dadurch gekennzeichnet, dass** mindestens ein Ableitungsorgan eine Platte (25) umfasst, die mindestens eine Schnittlinie (27) aufweist, die imstande ist zu brechen, wenn der auf die Platte (25) ausgeübte Druckwert den Druckgrenzwert erreicht, und eine Faltlinie (29), um die die Platte (25) schwenkbar beweglich ist.

4. Klappe (31; 61; 71; 81) nach einem der Ansprüche 1 oder 2, **dadurch gekennzeichnet, dass** mindestens ein Ableitungsorgan eine Platte (35; 65; 75; 85) umfasst, die eine Ermüdungslinie (37; 67; 77; 87) umfasst, die imstande ist zu brechen, wenn der auf die Platte (35; 65; 75; 85) ausgeübte Druckwert einen Druckgrenzwert erreicht, und eine Faltlinie (39; 69; 79; 89), um die die Platte (35; 65; 75; 85) schwenkbar beweglich ist.

5. Klappe (31; 61; 71; 81) nach vorangehendem Anspruch, **dadurch gekennzeichnet, dass** die Ermüdungslinie (37; 67; 77; 87) aus einer Rille besteht, die derart ausgerichtet ist, dass Kontakt mit der Überdruckluft besteht.

6. Klappe (171; 191) nach einem der Ansprüche 1 oder 2, **dadurch gekennzeichnet, dass** ein Ableitungsorgan eine Tür (175; 195) ist, deren Verriegelungssystem (176; 199) mindestens eine Ermüdungslinie (177; 197) aufweist.

7. Klappe (191) nach vorangehendem Anspruch, **dadurch gekennzeichnet, dass** die Ermüdungslinie (197) in eine Lasche (196) integriert ist, die imstande ist, in einer entsprechenden Aufnahme (194) zu gleiten, die in der Auflage (192) befestigt ist.

8. Klappe (121) nach einem der Ansprüche 1 oder 2, **dadurch gekennzeichnet, dass** das oder die Ableitungsmittel mindestens eine Tür (125) aufweisen, die imstande ist, sich elastisch zu verformen, um sich von der Auflage (122) zu lösen, wenn der Wert des Innendrucks, der auf die Klappe (121) ausgeübt wird, etwa den Druckgrenzwert erreicht.

9. Klappe (101) nach einem der Ansprüche 1 oder 2, **dadurch gekennzeichnet, dass** sie (101) eine Innenplatte (110), die dazu bestimmt ist, in Innenrichtung der Gondel (1) im Kontakt mit dem Überdruckluftstrom montiert zu sein, und eine Außenplatte (111), die dazu bestimmt ist, in Außenrichtung der Gondel (1) im Kontakt mit dem Außenluftstrom der Gondel (1) montiert zu sein, umfasst, wobei die Innenplatte (110) und die Außenplatte (111) anhand von Befestigungsmitteln (112) durch die Überdruckklappe (101) befestigt sind.

10. Klappe (101) nach vorangehendem Anspruch, **dadurch gekennzeichnet, dass** die Innenplatte (110) mindestens ein Bruchelement (117) aufweist, das imstande ist zu brechen, wenn der Wert des Innendrucks, der auf die Klappe (101) ausgeübt wird, etwa den Druckgrenzwert erreicht.

11. Klappe (101) nach vorangehendem Anspruch, **dadurch gekennzeichnet, dass** das Bruchelement (117) eine Rille ist, die imstande ist zu brechen, wenn der Wert des Drucks, der auf die Innenplatte (110) ausgeübt wird, den Druckgrenzwert erreicht.

12. Klappe (151) nach einem der Ansprüche 1 oder 2, **dadurch gekennzeichnet, dass** sie (151) einen zentralen Abschnitt (155) und einen seitlichen Abschnitt (152) aufweist, wobei der seitliche Abschnitt (152) imstande ist, sich derart zu verformen, dass das Anheben des zentralen Abschnitts (155) in der Art einer Klappe erlaubt wird, um Überdruckluft abzuleiten.

13. Klappe (81) nach einem der vorangehenden Ansprüche, **dadurch gekennzeichnet, dass** sie (81) etwa ein Gitter (84) bedeckt, das dazu bestimmt ist, in der Gondel (1) im Kontakt mit dem Überdruckluftstrom montiert zu sein, wobei das Gitter (84) konfiguriert ist, um einen Teil der Überdruckluft aus der Gondel (1) abzuleiten.

14. Klappe (21; 31; 61; 71; 81; 101; 121; 151; 171; 191) nach einem der vorangehenden Ansprüche, **dadurch gekennzeichnet, dass** das oder die Ableitungselement(e) (25; 35; 65; 75; 85; 125; 155; 175; 195) und/oder der oder die Abschnitt(e) (27; 37; 67; 77; 152; 177; 197) aus einem thermoplastischen Material oder aus einem metallischen Material hergestellt sind.

15. Gondel (1) für Turbotriebwerk (5), **dadurch gekennzeichnet, dass** sie mindestens eine Klappe (21; 31; 61; 71; 81; 101; 121; 151; 171; 191) nach einem der vorangehenden Ansprüche aufweist.

16. Gondel (1) nach vorangehendem Anspruch, **dadurch gekennzeichnet, dass** sie eine Vielzahl von Klappen (21; 31; 61; 71; 81; 101; 121; 151; 171; 191) nach einem der Ansprüche 1 bis 15 aufweist, die imstande sind, Überdruckluft in der Gondel (1) bei verschiedenen Druckgrenzwerten abzuleiten.
